# EUROPÄISCHE PATENTANMELDUNG

(11) **EP 2 277 612 A1**
(43) Veröffentlichungstag der Anmeldung: **26.01.2011**
(21) Anmeldenummer: 10179230.7
(22) Anmeldetag: 13.12.2000
(51) Int. Cl.: B01D 12/00, B01D 9/00, F26B 5/00

(54) **Verfahren und Vorrichtung zur Abtrennung von Feststoffen aus einer flüssigen Phase**

(30) Priorität: 17.12.1999 DE 19961143
(62) Teilanmeldung aus: 00987397.7
(71) Anmelder: Ticona GmbH, 65451 Kelsterbach (DE)
(72) Erfinder: Die Erfindernennung liegt noch nicht vor
(74) Vertreter: von Kreisler Selting Werner

(57) **Zusammenfassung**

Die vorliegende Erfindung betrifft ein Verfahren und eine Vorrichtung zur Abtrennung von Feststoffen aus einer ersten flüssigen Phase, wobei der Feststoff in einer ersten flüssigen Phase mit einer zweiten flüssigen Phase in Kontakt gebracht wird und der Feststoff in die zweite flüssige Phase überführt wird. Der Feststoff wird im Gegenstrom gewaschen und beim Waschvorgang findet eine zumindest teilweise Verdrängungswäsche statt.

## Beschreibung

Die vorliegende Erfindung betrifft ein Verfahren und eine Vorrichtung zur Abtrennung von Feststoffen aus einer flüssigen Phase.

Die Abtrennung von Feststoffen aus einer flüssigen Phase ist eine in der Technik häufig gestellte Aufgabe. Beispielhaft sei die Abtrennung von Aluminiumhydroxid-Kristallen von der basischen Mutterlauge genannt. Für die Abtrennung ist es wichtig, den Feststoff möglichst vollständig von der flüssigen Phase zu befreien, ohne daß große Mengen an verdünnter Waschlauge anfallen.

Ein besonderes Trennproblem ist dann gegeben, wenn die flüssige Phase praktisch vollständig (> 99%) vom Feststoff abgetrennt werden muß. Häufig enthält die flüssige Phase nichtflüchtige Komponenten, die abgetrennt werden müssen. In diesem Fall löst eine Trocknung des Feststoffes das Trennproblem nicht. Vielmehr will man den Feststoff waschen, ohne daß verdünnte Waschlaugen anfallen. Dieser Fall liegt bei der Herstellung von einigen Hochleistungspolymeren in hochsiedenden Lösungsmitteln vor. Von besonderer Relevanz ist das erfindungsgemäße Verfahren für solche Polymere, die in einem hochsiedenden Lösemittel unter Bildung von Salzen oder nachträglich zu neutralisierender Säuren oder Basen hergestellt werden. Beispiele für solche Prozesse sind die Herstellung von Polyaramiden aus Diaminen und Disäurechloriden, von Polycarbonaten aus Diphenolen oder Diphenolaten mit Phosgen, von Polysulfonen, Polyethersulfonen oder Polyetherketonen aus Diphenolaten und dihalogenierten aromatischen Kohlenwasserstoffen oder die Herstellung von Polyarylensiloxanen aus Diaryldichlorsilanen mit Diphenolaten. Insbesondere schließt der Begriff Hochleistungspolymere die Polyarylensulfide ein.

Bei der Herstellung von Poly(p-phenylen)sulfid (PPS) muß das Polymer von hochsiedenden N-Methylpyrrolidon (NMP) sowie ungelösten und gelösten Nebenprodukten befreit werden. Der Anteil des Restlösemittels (NMP) im Polymeren soll dabei unter 100 ppm liegen. Das Anfallen von verdünnten NMPhaltigen Waschlaugen würde einen hohen destillativen Aufwand erfordern und muß daher vermieden werden.

Nach dem Stand der Technik kann eine Trennung durch eine Filtration und anschließende Wäsche des Filterkuchens durchgeführt werden. Für eine praktisch vollständige Entfernung der flüssigen Phase vom Feststoff sind aber beträchtliche Volumina der Waschflüssigkeit erforderlich, die kostenintensiv aufgearbeitet werden müssen.

Es ist ebenfalls bekannt, aus der Fest-Flüssig-Mischung das Lösungsmittel, gegebenenfalls bei erhöhter Temperatur, zu verdampfen. Gerade bei hochsiedenden Lösungsmitteln wie NMP ist dies langwierig und aufwendig. Außerdem verbleiben nichtflüchtige Verunreinigungen mit dem Feststoff PPS zurück und müssen in einem weiteren Verfahrensschritt entfernt werden.

Aus wirtschaftlicher Sicht besteht weiterhin ein Interesse, die genannte Trennaufgabe in einem kontinuierlich arbeitenden Trennapparat zu lösen.

Die Aufgabe der vorliegenden Erfindung besteht darin, ein Verfahren und eine Vorrichtung zur Abtrennung von Feststoffen aus Fest-Flüssig-Mischungen bereitzustellen, wobei die flüssige Phase praktisch vollständig vom Feststoff abgetrennt wird, ohne daß eine große Menge an verdünnter Waschlauge anfällt.

Die Aufgabe der vorliegenden Erfindung wird dadurch gelöst, daß der Feststoff in einer ersten flüssigen Phase mit einer zweiten flüssigen Phase im Gegenstrom in Kontakt gebracht wird und der Feststoff in die zweite flüssige Phase überführt wird.

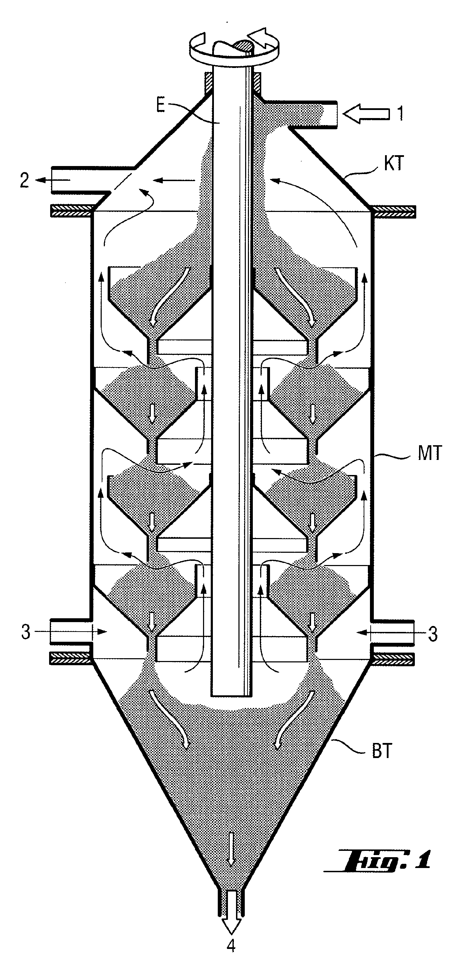

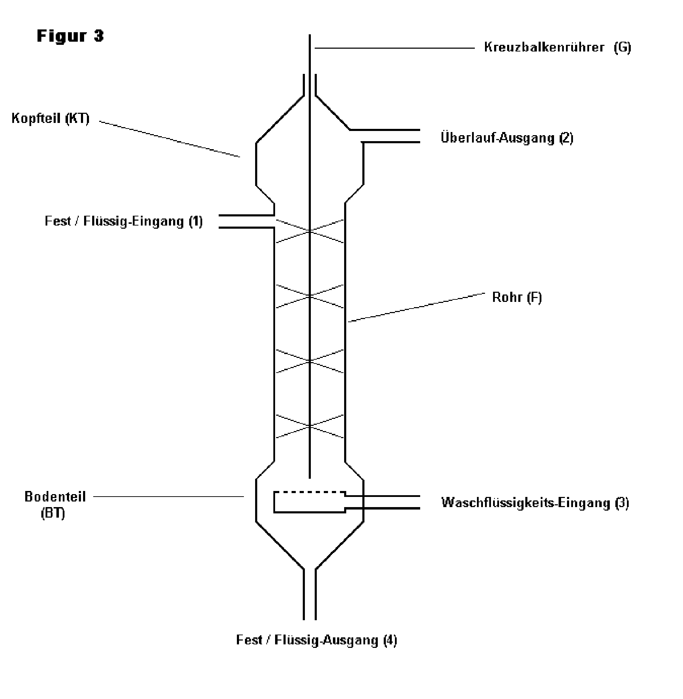

Das erfindungsgemäße Verfahren wird durchgeführt, indem der Feststoff in der ersten flüssigen Phase im Gegenstrom mit einer zweiten Flüssigkeit in einer Vorrichtung in Kontakt gebracht wird, die mindestens einen Fest-Flüssig-Eingang (1), mindestens einen Fest-Flüssig-Ausgang (4), mindestens einen Flüssigkeitseingang (3) und mindestens einen Flüssigkeitsausgang (2) besitzt (vgl. Figur 1 und Figur 3).

Der Feststoff wird in der ersten flüssigen Phase in den Fest-Flüssig-Eingang (1) gegeben. Die zweite flüssigen Phase wird in den Flüssigkeitseingang (3) gegeben. Der Feststoff wird möglichst vollständig in der zweiten flüssigen Phase aus dem Fest-Flüssig-Ausgang (4) abgeführt. Die erste flüssige Phase wird möglichst vollständig aus dem Flüssigkeitsausgang (2) abgeführt.

Bei dem erfindungsgemäßen Verfahren werden aus dem Fest-Flüssig-Ausgang (4) mit dem Feststoff in der zweiten flüssigen Phase nur geringe Mengen an erster flüssiger Phase ausgetragen. Der Anteil an erster flüssiger Phase, bezogen auf die zweite flüssige Phase im Fest-Flüssig-Ausgang (4), beträgt weniger als 50 Gew.-%, bevorzugt weniger als 10 Gew.-% und besonders bevorzugt weniger als 1 Gew.-%.

Bei dem erfindungsgemäßen Verfahren wird die erste flüssige Phase nicht sehr stark mit der zweiten flüssigen Phase verdünnt. Der Anteil an zweiter flüssiger Phase, bezogen auf die erste flüssige Phase im Flüssigkeitsausgang (2) beträgt weniger als 80 Gew.-%, bevorzugt weniger als 50 Gew.-%, besonders bevorzugt weniger als 30 Gew.-%.

Bei dem erfindungsgemäßen Verfahren werden in der Regel nur geringe Mengen an Feststoff im Flüssigkeitsausgang (2) ausgetragen. Dieser Feststoffanteil beträgt, bezogen auf den in den Fest-Flüssig-Eingang (1) eingetragenen Feststoff bevorzugt weniger als 30 Gew.-%, besonders bevorzugt weniger als 10 Gew.-%.

Der Feststoff durchläuft in dem erfindungsgemäßen Verfahren die Vorrichtung durch Sedimentation unter Schwerkraft. In einer bevorzugten Ausführung der Erfindung wird der Feststoff der Fest-Flüssig-Mischung in einer Vorrichtung mindestens einmal zur Sedimentation gebracht und der sedimentierende Feststoff wird mit einer zweiten flüssigen Phase im Gegenstrom gewaschen.

Bei dem erfindungsgemäßen Verfahren ist bevorzugt die erste flüssige Phase ein organisches Lösungsmittel und die zweite flüssige Phase Wasser. Als organische Lösungsmittel werden zum Beispiel dipolar aprotische Lösungsmittel verwendet, bevorzugt NMP.

Bei dem erfindungsgemäßen Verfahren sind die erste und zweite flüssige Phase bevorzugt mischbar.

Der Feststoff kann aus einer oder mehreren Komponenten bestehen. Bevorzugt ist der Hauptbestandteil des Feststoffs ein Polymer wie ein Polyarylensulfid, ganz besonders bevorzugt PPS.

Das erfindungsgemäße Verfahren kann auch Feststoffgemische von einander trennen, wenn dessen Bestandteile sich unterschiedlich in der ersten und zweiten flüssigen Phase lösen. Bevorzugt ist es, wenn sich der Hauptbestandteil des Feststoffs weder in der ersten noch in der zweiten flüssigen Phase löst. Abzutrennende Nebenbestandteile des Feststoffs oder auch der ersten flüssigen Phase weisen bevorzugt eine gute Löslichkeit in der zweiten flüssigen Phase auf.

In einer besonders bevorzugten Ausführungsform ist ein abzutrennendes und zu reinigendes Polymer, beispielsweise PPS, in der ersten und zweiten flüssigen Phase unter den Bedingungen des erfindungsgemäßen Verfahrens unlöslich, während die zu entfernenden Verunreinigungen, beispielsweise Salz und hochsiedendes Lösemitel, sich in der zweiten flüssigen Phase lösen.

Besonders vorteilhaft bei dem erfindungsgemäßen Verfahren ist die Möglichkeit, die Abtrennung des Feststoffes kontinuierlich auch unter erhöhter Temperatur und erhöhtem Druck durchführen zu können.

Bei dem erfindungsgemäßen Verfahren unterscheidet sich die Dichte des Feststoffs von der Dichte der ersten und zweiten flüssigen Phase.

Die Aufgabe wird durch ein Verfahren gelöst, wobei die Vorrichtung des erfindungsgemäßen Verfahrens mindestens ein Kopfteil, mindestens ein Bodenteil und mindestens ein Mittelteil mit n Sedimentationsböden enthält.

Eine erste bevorzugte Ausgestaltung der Erfindung ist ein Verfahren mit einer Vorrichtung, die mindestens einen Sedimentationsboden (SB) aufweist, der mindestens einen Sedimentationstrichter mit einem Sedimentabfluß, mindestens eine Durchströmungszone und mindestens eine Überstandsableitung enthält.

Der Feststoff wird auf jedem Sedimentationsboden im Sedimentationstrichter sedimentiert und in der Durchströmungszone gewaschen. Dieser Vorgang wird in n Stufen sequentiell wiederholt. Der Sedimentationsboden ist trichterförmig aufgebaut und mündet in einen Abfluß, der den Fest-Flüssig-Ausgang darstellt. Das Kopfteil enthält einen Eingang für die Fest-Flüssig-Mischung, der zum obersten Sedimentationsboden führt. Das Kopfteil enthält weiter einen Ausgang für die Überstandsableitung des obersten Sedimentationsbodens.

Durch die Vorrichtung des erfindungsgemäßen Verfahrens ist es möglich, den Feststoff aus der Mischung so abzutrennen, daß der Anteil der ersten flüssigen Phase, die mit dem Feststoff ausgetragen wird, durch die Erhöhung der Anzahl der Sedimentationsböden verkleinert werden kann.

Die Sedimentationsböden sind übereinander angeordnet. Die Überstandsableitung eines Sedimentationsbodens ist mit der Durchströmungszone des folgenden, darüberliegenden Sedimentationsbodens verbunden. Der Überstand eines Sedimentationsbodens besteht aus einer Mischung der ersten und der zweiten flüssigen Phase. In der Durchströmungszone tritt der Überstand in einer geometrisch genau definierten Anordnung durch den sedimentierenden Feststoff und bewirkt eine zumindest teilweise Verdrängungswäsche des Feststoffs. Auf diese Weise wird der Überstand eines Sedimentationsbodens als Waschflüssigkeit für den darüberliegenden Sedimentationsboden verwendet. Frische Waschflüssigkeit wird der Durchströmungszone des untersten Sedimentationsbodens in Form von reiner zweiter flüssiger Phase durch den Flüssigkeitseingang (3) zugeführt. Während der Feststoff die Vorrichtung des erfindungsgemäßen Verfahrens von oben nach unten durchläuft, fließt die Waschflüssigkeit von unten nach oben. Durch dieses Gegenstromprinzip wird eine außerordentlich effektive Abtrennung der ersten flüssigen Phase vom Feststoff erreicht.

Die geometrische Anordnung der Durchströmungszone wird so gewählt, daß der Feststoff in den einzelnen Sedimentationsböden nicht direkt entgegen der aufströmenden Waschflüssigkeit sedimentiert. Der Durchtritt des Feststoffs in den folgenden Sedimentationsboden wird durch die im Gegenstrom geführte Waschflüssigkeit nicht behindert, da die Waschflüssigkeit in separaten Überstandsableitungen zur Durchströmungszone des nächsten darüberliegenden Sedimentationsbodens geführt wird. Dadurch ist eine weitgehend ungestörte Sedimentation gewährleistet, wodurch auch Feststoffe mit geringer Sedimentationsgeschwindigkeit abgetrennt werden können.

Die Trennwirkung der Vorrichtung des erfindungsgemäßen Verfahrens hängt wesentlich von der Anzahl der Sedimentationsböden ab. Die Trennwirkung läßt sich durch die Anzahl der Sedimentationsböden den jeweiligen Trennaufgaben anpassen. Die Trennwirkung steigt mit der Anzahl der Sedimentationsböden.

Eine bevorzugte Ausgestaltung der Erfindung ist eine Vorrichtung mit n Sedimentationsböden, wobei n eine ganze Zahl von 2 bis 1000 bedeutet.

Eine besonders bevorzugte Ausgestaltung der Erfindung ist eine Vorrichtung, wobei n eine ganze Zahl 3 bis 200 bedeutet.

Eine ganz besonders bevorzugte Ausgestaltung der Erfindung ist eine Vorrichtung, wobei n eine ganze Zahl 4 bis 100 bedeutet.

Eine zweite bevorzugte Ausgestaltung der Erfindung ist ein Verfahren mit einer Vorrichtung, die ein gerades Rohr mit einer zentrierten Rührwelle aufweist. Die Rührwelle trägt einen Kreuzbalkenrührer mit mindestens einer Ebene. In einer waagerechten Ebene des Kreuzbalkenrührers sind mehrere Rührflügel oder Rührbalken angeordnet.

Während der durch den Fest-Flüssig-Eingang eintretende Feststoff die Vorrichtung des erfindungsgemäßen Verfahrens von oben nach unten durchläuft, fließt die Waschflüssigkeit von unten nach oben. Mittels kontinuierlich von oben nach unten zunehmender Verdrängung der ersten flüssigen Phase durch die zweite flüssige Phase ist es möglich, den Feststoff aus der Mischung so abzutrennen, daß der Anteil der ersten flüssigen Phase, die mit dem Feststoff ausgetragen wird, verkleinert werden kann. Frische Waschflüssigkeit wird der Vorrichtung am unteren Ende des Mittelteils in Form von reiner zweiter flüssiger Phase durch den Flüssigkeitseingang (3) zugeführt. Durch dieses Gegenstromprinzip wird eine außerordentlich effektive Abtrennung der ersten flüssigen Phase vom Feststoff erreicht.

Die geometrische Anordnung der Kreuzbalkenrührer wird so gewählt, daß sie eine Strähnenbildung der aufsteigenden flüssigen Phase 2 weitgehend unterdrücken. Insbesondere reichen die Rührflügel bis nahe an die Innenwand des geraden Rohres. Eine Strähnenbildung würde das Waschergebnis des erfindungsgemäßen Verfahrens beeinträchtigen. Bewährt haben sich mindestens 2 Rührflügel oder Rührbalken pro Ebene des Kreuzbalkenrührers. In einer bevorzugten Ausführungsform trägt der Kreuzbalkenrührer drei bis acht, besonders bevorzugt vier Rührflügel oder Rührbalken pro Ebene.

Die Trennwirkung der Vorrichtung des erfindungsgemäßen Verfahrens hängt wesentlich von der Anzahl und dem Abstand der Ebenen des Kreuzbalkenrührers ab. Die Trennwirkung läßt sich durch die Anzahl der Ebenen den jeweiligen Trennaufgaben anpassen. Die Trennwirkung steigt mit der Anzahl der Ebenen.

Während des Betriebes dreht sich der Kreuzbalkenrührer mit mäßiger Drehzahl. Typischerweise beträgt die Drehzahl 0.1 bis 1000 U/min, bevorzugt 1 bis 200 U/min und besonders bevorzugt 5 bis 50 U/min.

Häufig ist es vorteilhaft, wenn der oberste Sedimentationsboden oder das Kopfteil der Vorrichtung einen größeren Durchmesser aufweisen als die darunterliegenden Sedimentationsböden. Durch diese Maßnahme wird der Feststoffanteil im Flüssigkeitsausgang (2), der den Überstandsablauf des obersten Sedimentationsbodens bildet, verringert.

Als Fest-Flüssig-Mischungen eignen sich solche Mischungen, bei denen der Feststoff unter Schwerkraft sedimentiert. Die Obergrenze des Feststoffgehaltes ist durch die Fließfähigkeit der Mischung gegeben. Die Vorrichtung kann auch sehr kleine Feststoffanteile abtrennen.

Die Dichte des Feststoffes unterscheidet sich von der Dichte der flüssigen Phase. Die Sedimentationsgeschwindigkeit des Feststoffs in der flüssigen Phase sollte größer als 1 mm/min betragen. Die Sinkgeschwindigkeit eines Feststoffes ist abhängig von dem Dichteunterschied zur flüssigen Phase, der mittleren Korngröße, der Korngrößenverteilung und der Viskosität der flüssigen Phase. Mit der Vorrichtung des erfindungsgemäßen Verfahrens lassen sich Feststoffe mit Korngrößen > 1 µm abtrennen. Die Abtrennung wird verbessert durch steigende Korngröße und einen steigenden Dichteunterschied.

Die Trennleistung der Vorrichtung des erfindungsgemäßen Verfahrens läßt sich durch Änderung der Bauform und Einstellung der Betriebsbedingungen in weiten Grenzen an die jeweilige Trennaufgabe anpassen. In der ersten bevorzugten Ausführungsform läßt sich die Bauform durch die Anzahl der Sedimentationsböden n, Neigung der Sedimentationstrichter, die Geometrie des Sedimentabflusses und der Überstandsableitung sowie die geometrische Gestaltung der Durchströmungszone verändern. In der zweiten bevorzugten Ausführungsform läßt sich die Bauform durch die Anzahl n der Ebenen des Kreuzbalkenrührers, den senkrechten Abstand der Ebenen sowie die Gestalt der Rührflügel oder Rührbalken verändern.

Vorteilhafte Betriebsbedingungen werden durch Einstellung der Zu- und Abflußgeschwindigkeiten von Fest-Flüssig-Mischungen, der Zuflußgeschwindigkeit der zweiten flüssigen Phase oder der Rotationsgeschwindigkeit des Kreuzbalkenrührers erreicht.

Es können auch mehrere Vorrichtungen in Serie verwendet werden. Durch diese Anordnung wird bei gleicher Durchsatzleistung die Trennwirkung verbessert.

Die Erfindung wird anhand einer Zeichnung und eines Beispieles näher erläutert.

### Zeichnung

Die Zeichnung besteht aus Figur 1 Figur 2 und Figur 3.
- Figur 1:: zeigt beispielhaft eine erste bevorzugte Ausführungsform der Vorrichtung des erfindungsgemäßen Verfahrens als Sedimentator.

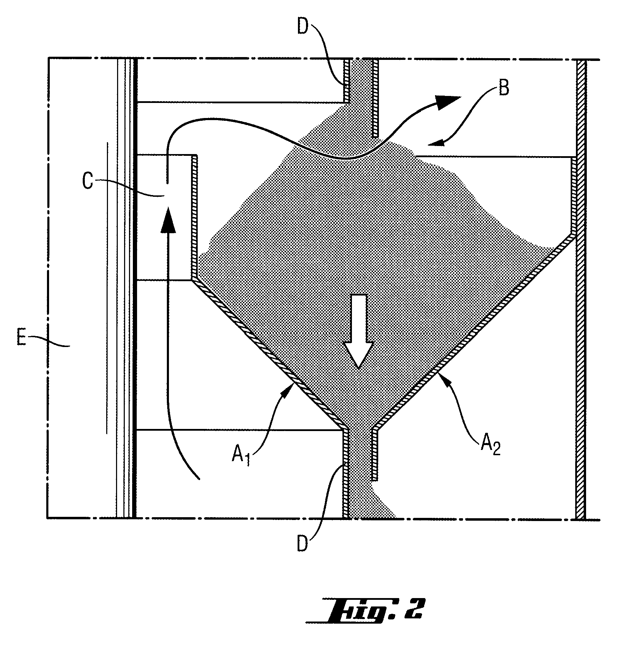

- Figur 2:: zeigt einen Ausschnitt (wiederkehrende Einheit) der Vorrichtung aus Figur 1
- Figur 3:: zeigt eine zweite bevorzugte Ausführungsform der Vorrichtung zur Durchführung des erfindungsgemäßen Verfahrens..

Die Vorrichtung gemäß Figur 1 und Figur 2 weisen mindestens einen Sedimentationstrichter (A) mit Sedimentabfluß (D), mindestens eine Durchströmungszone (B) und mindestens eine Überstandsableitung (C) auf.

Das Bodenteil (BT) der Vorrichtung gemäß Figur 1 ist trichterförmig aufgebaut und mündet in einen Abfluß, der gleichzeitig den Fest-Flüssig-Ausgang (4) darstellt. Das Kopfteil (KT) enthält einen Eingang für die Fest-Flüssig-Mischung (1). Das Kopfteil (KT) enthält weiter einen Flüssigkeitsausgang (2). Das Mittelteil (MT) enthält n Sedimentationsböden und einen Flüssigkeitseingang (3).

Ein Sedimentationsboden (SB) gemäß Figur 2 enthält einen Sedimentationstrichter (A) mit Sedimentabfluß (D), eine Durchströmungszone (B) und eine Überstandsableitung (C). In der Durchströmungszone (B) strömt die Mischung der ersten und zweiten flüssigen Phase aus der Überstandsableitung (C) der darunterliegenden Stufe durch die lockere Feststoffaufschüttung und bewirkt eine zumindest teilweise Verdrängungswäsche. Ein Sedimentationstrichter gemäß Figur 2 besteht aus einem inneren Trichtersegment (A1) und einem äußeren Trichtersegment (A2). Die inneren Trichtersegmente (A2) sind an einer drehbaren inneren Welle (E) befestigt.

Die Vorrichtung gemäß Figur 3 weist ein gerades Rohr (F) sowie eine zentrale Rührwelle (G) auf. Die Rührwelle trägt übereinander angeordnete Kreuzbalkenrührer in mehreren Ebenen. Jede Ebene weist vier runde Rührbalken auf, die bis nahe an die Wand reichen.

Das Bodenteil (BT) der Vorrichtung gemäß Figur 3 ist trichterförmig aufgebaut und mündet in einen Abfluß, der den Fest-Flüssig-Ausgang (4) darstellt. Das Kopfteil (KT) enthält den Flüssigkeitsausgang (2)... Das obere Ende des Rohres (F) enthält einen Eingang für die Fest-Flüssig-Mischung (1).Die Waschflüssigkeit wird über den Eingang (3) zugegeben.

### Beispiel

### Beispiel 1

Es wurde eine Versuchsvorrichtung gemäß Figur 1 mit 120 mm Durchmesser verwendet. Die Vorrichtung wies 20 Sedimentationsböden auf.

Es wurden 400 g pro Minute einer Mischung von 25 Gew.-% Polyphenylensulfid und 5 Gew.-% festem Kochsalz suspendiert in N-Methylpyrrolidon (5 Gew.-% Wasser enthaltend) bei einer Temperatur von 65 °C in den Fest-Flüssig-Eingang (1) der in Figur 1 dargestellten Vorrichtung gegeben. Gleichzeitig wurden 300 ml pro Minute Wasser mit einer Temperatur von 50 °C in den Flüssigkeitseingang (3) gegeben. Es wurden 300 g pro Minute einer Suspension aus 100 g Polyphenylensulfid in 200 g Wasser aus dem Fest-Flüssig-Ausgang (4) entnommen. Mit dem Polyphenylensulfid in Wasser wurden weniger als 0,5 Gew.-% der eingegebenen Kochsalzmenge ausgetragen. Der NMP-Gehalt der am Fest-Flüssig-Ausgang (4) entnommenen wäßrigen Flüssigphase lag unter 1 %.

Am Flüssigkeitsausgang (2) wurde eine Mischung aus Wasser und NMP ausgetragen, die mehr als 99,5 % der eingetragenen Kochsalzmenge enthielt. Die NMP-Wasser Mischung enthielt über 65 Gew.-% NMP. Es wurde kein meßbarer Austrag von PPS-Feststoff aus dem Flüssigkeitsausgang (2) beobachtet. Zur Isolierung des Polyphenylensulfids wurde die Mischung getrocknet. Die NMP/Wassermischung wurde destilliert und das NMP zurückgewonnen.

### Beispiel 2

Die Sedimentationsapparatur besteht aus einem geraden Rohr von 60 mm Durchmesser und 600 mm Länge mit einem mehrfachen Kreuzbalkenrührer, dessen Rührblätter bis nahe an die Wand reichen. Der Abstand der Rührblätterebenen entlang der vertikalen Rührwelle beträgt 50 mm . Der Sedimentator mit Kopf- und Bodenteil ist in Figur 3 dargestellt.

Die Rührerdrehzahl wurde auf 10 U/min eingestellt. Es wurden 180 g pro Minute einer Mischung von 25 Gew.-% Polyphenylensulfid und 5 Gew.-% festem Kochsalz suspendiert in N-Methylpyrrolidon (5 Gew.-% Wasser enthaltend) bei einer Temperatur von 65 °C in den Fest-Flüssig-Eingang (1) der in Figur 2 dargestellten Vorrichtung gegeben. Gleichzeitig wurden 110 ml pro Minute Wasser mit einer Temperatur von 65 °C in den Flüssigkeitseingang (3) gegeben. Es wurden 125 g pro Minute einer Suspension aus 45 g Polyphenylensulfid in 80 g Wasser aus dem Fest-Flüssig-Ausgang (4) entnommen. Mit dem Polyphenylensulfid in Wasser wurden weniger als 0,2 Gew.-% der eingegebenen Kochsalzmenge ausgetragen. Der NMP-Gehalt der am Fest-Flüssig-Ausgang entnommenen wäßrigen Flüssigphase lag unter 0.5 Gew.%.

Am Flüssigkeitsausgang (2) wurde eine Mischung aus Wasser und NMP ausgetragen, die mehr als 99,5 % der eingetragenen Kochsalzmenge enthielt. Die NMP-Wasser Mischung enthielt über 65 Gew.-% NMP. Es wurde kein meßbarer Austrag von PPS-Feststoff aus dem Flüssigkeitsausgang (2) beobachtet. Zur Isolierung des Polyphenylensulfids wurde die am Ausgang (4) entnommene PPS/Wasser-Mischung getrocknet. Die NMP/Wassermischung wurde destilliert und das NMP zurückgewonnen.

Mit diesen Beispielen wurde gezeigt, daß sich Polyphenylensulfid aus einer Mischung mit Kochsalz suspendiert in NMP in einem Sedimentator abtrennen läßt, ohne daß stark verdünnte Waschlaugen anfallen. Das NMP läßt sich ohne Verdampfen großer Wassermengen vollständig durch Destillieren zurückgewinnen. Die Abtrennung von NMP und Kochsalz von PPS liegt deutlich über 99%.

Durch die günstige Rückgewinnung des NMP und geringen Verlust an PPS ist das erfindungsgemäße Verfahren technisch interessant.
1. Verfahren zur Abtrennung von Feststoffen aus einer ersten flüssigen Phase, wobei der Feststoff in einer ersten flüssigen Phase mit einer zweiten flüssigen Phase im Gegenstrom in Kontakt gebracht wird und der Feststoff in die zweite flüssige Phase überführt wird.
2. Verfahren nach Punkt 1, wobei der Feststoff in der ersten flüssigen Phase im Gegenstrom mit einer zweiten flüssigen Phase in einer Vorrichtung in Kontakt gebracht wird und die Vorrichtung
   a) mindestens einen Fest-Flüssig-Eingang,
   b) mindestens einen Fest-Flüssig-Ausgang,
   c) mindestens einen Flüssigkeits-Eingang und
   d) mindestens einen Flüssigkeits-Ausgang enthält.
3. Verfahren nach Punkt 1 oder 2, wobei der Feststoff im Gegenstrom gewaschen wird und beim Waschvorgang eine zumindest teilweise Verdrängungswäsche stattfindet.
4. Verfahren nach einem oder mehreren der Punkte 1 bis 3, wobei die erste flüssige Phase ein organisches Lösungsmittel als Hauptbestandteil und die zweite flüssige Phase Wasser als Hauptbestandteil enthält.
5. Verfahren nach einem oder mehreren der Punkte 1 bis 4, wobei der Hauptbestandteil des Feststoffs ein Polymer ist.
6. Verfahren nach einem oder mehreren der Punkte 1 bis 5, wobei der Hauptbestandteil des Feststoffs ein Polyarylensulfid, insbesondere PPS, ist.
7. Verfahren nach einem oder mehreren der Punkte 1 bis 6, wobei der Anteil an erster flüssiger Phase, bezogen auf die zweite flüssige Phase im Fest-Flüssig-Ausgang (4), weniger als 50 Gew.-%, bevorzugt weniger als 10 Gew.-% und besonders bevorzugt weniger als 1 Gew.-% beträgt.
8. Verfahren nach einem oder mehreren der Punkte 1 bis 7, wobei der Anteil an zweiter flüssiger Phase, bezogen auf die erste flüssige Phase im Flüssigkeitsausgang (2) weniger als 80 Gew.-%, bevorzugt weniger als 50 Gew.-%, besonders bevorzugt weniger als 30 Gew.-% beträgt.
9. Verfahren nach einem oder mehreren der Punkte 1 bis 8, wobei die erste und die zweite flüssige Phase mischbar sind.
10. Verfahren nach einem oder mehreren der Punkte 1 bis 9, wobei sich die Dichte des Feststoffs von der Dichte der ersten und zweiten flüssigen Phase unterscheidet.
11. Verfahren nach einem oder mehreren der Punkte 1 bis 10, wobei die Vorrichtung n Stufen enthält und n eine ganze Zahl ≥ 1 bedeutet.
12. Verfahren nach einem oder mehreren der Punkte 1 bis 11, wobei der Feststoff die Vorrichtung durch Sedimentation unter Schwerkraft durchläuft.
13. Verfahren nach einem oder mehreren der Punkte 1 bis 12, wobei der Feststoff in den einzelnen Sedimentationsböden nicht direkt entgegen der aufströmenden Waschflüssigkeit sedimentiert.
14. Verfahren nach einem oder mehreren der Punkte 1 bis 13, wobei die Vorrichtung mindestens ein Kopfteil (KT), mindestens ein Bodenteil (BT) und dazwischen mindestens einen Mittelteil (MT) mit n Sedimentationsböden enthält.
15. Verfahren nach einem oder mehreren der Punkte 1 bis 14, wobei mehrere Vorrichtungen in Serie oder parallel geschaltet sind.
16. Vorrichtung zur Abtrennung von Feststoffen aus einer ersten flüssigen Phase, wobei der Feststoff in der ersten flüssigen Phase mit einer zweiten flüssigen Phase im Gegenstrom in Kontakt gebracht wird und der Feststoff in die zweite flüssige Phase überführt wird.
17. Vorrichtung nach Punkt 16, wobei der Feststoff in der ersten flüssigen Phase im Gegenstrom mit einer zweiten flüssigen Phase in Kontakt gebracht wird und die Vorrichtung
   a) mindestens einen Fest-Flüssig-Eingang,
   b) mindestens einen Fest-Flüssig-Ausgang,
   c) mindestens einen Flüssigkeits-Eingang und
   d) mindestens einen Flüssigkeits-Ausgang enthält.
18. Vorrichtung nach Punkt 16 oder 17, wobei der Feststoff im Gegenstrom gewaschen wird und beim Waschvorgang eine zumindest teilweise Verdrängungswäsche stattfindet.
19. Vorrichtung nach Punkt 16 bis 18, die mindestens einen Sedimentationsboden (SB) aufweist, der mindestens einen Sedimentationstrichter mit einem Sedimentabfluß, mindestens eine Durchströmungszone und mindestens eine Überstandsableitung enthält.
20. Vorrichtung nach einem oder mehreren der Punkte 16 bis 19, wobei die Überstandsableitung eines Sedimentationsbodens mit der Durchströmungszone des folgenden, darüberliegenden Sedimentationsbodens verbunden ist.
21. Vorrichtung nach einem oder mehreren der Punkte 16 bis 20, wobei der Feststoff in den einzelnen Sedimentationsböden nicht direkt entgegen der aufströmenden Waschflüssigkeit sedimentiert.
22. Vorrichtung nach einem oder mehreren der Punkte 16 bis 21, wobei die Vorrichtung mindestens ein Kopfteil (KT), mindestens ein Bodenteil (BT) und dazwischen mindestens einen Mittelteil (MT) mit n Sedimentationsböden enthält.
23. Vorrichtung nach einem oder mehreren der Punkte 16 bis 22, wobei die Vorrichtung eine innere, drehbare Welle (E) aufweist.
24. Vorrichtung nach einem oder mehreren der Punkte 16 bis 23, wobei mehrere Vorrichtungen in Serie oder parallel geschaltet sind.
25. Verwendung einer Vorrichtung nach einem oder mehreren der Punkte 16 bis 24 zur Abtrennung von in Flüssigkeiten suspendierten Feststoffen.

## Patentansprüche

1. Vorrichtung zur Abtrennung von in einer ersten flüssigen Phase suspendiertem Feststoff durch Sedimentation unter Schwerkraft, welche ein gerades Rohr mit einer zentralen Rührwelle aufweist und die mindestens einen Fest-Flüssig-Eingang, mindestens einen Fest-Flüssig-Ausgang, mindestens einen Flüssigkeits-Eingang und mindestens einen Flüssigkeits-Ausgang enthält, **dadurch gekennzeichnet, dass** die Rührwelle einen Kreuzbalkenrührer mit mindestens einer Ebene trägt, dessen Rührflügel bis nahe an die Innenwand des Rohres heranreichen und welcher sich während des Betriebes der Vorrichtung mit 1 bis 200 U/min bewegt.

2. Verfahren zur Abtrennung von in einer ersten flüssigen Phase suspendiertem Feststoff durch Sedimentation unter Schwerkraft in einer Vorrichtung gemäß Anspruch 1, wobei der Feststoff im Gegenstrom mit einer zweiten flüssigen Phase derart gewaschen wird, dass beim Waschvorgang eine zumindest teilweise Verdrängung der ersten flüssigen Phase durch die zweite flüssige Phase stattfindet.

3. Verfahren nach Anspruch 2, **dadurch gekennzeichnet, dass** die erste flüssige Phase ein organisches Lösungsmittel als Hauptbestandteil und die zweite flüssige Phase Wasser als Hauptbestandteil enthält.

4. Verfahren nach einem der Ansprüche 2 oder 3, wobei der Anteil an erster flüssiger Phase, bezogen auf die zweite flüssige Phase, im Fest-Flüssig-Ausgang weniger als 50 Gew.-% beträgt.

5. Verfahren nach einem oder mehreren der Ansprüche 2 bis 4, wobei der Anteil an zweiter flüssiger Phase, bezogen auf die erste flüssige Phase, im Flüssigkeits-Ausgang weniger als 80 Gew.-% beträgt.

6. Verfahren nach einem oder mehreren der Ansprüche 2 bis 5, wobei mehrere Vorrichtungen in Serie oder parallel geschaltet sind.

7. Verfahren nach einem oder mehreren der Ansprüche 2 bis 6, wobei die erste und die zweite flüssige Phase mischbar sind.

8. Verfahren nach einem oder mehreren der Ansprüche 2 bis 7, wobei sich die Dichte des Feststoffs von der Dichte der ersten und zweiten flüssigen Phase unterscheidet.

9. Verfahren nach einem oder mehreren der Ansprüche 2 bis 8, **dadurch gekennzeichnet, dass** der Hauptbestandteil des Feststoffes ein Hochleistungspolymer ist.

10. Verfahren nach Anspruch 9, **dadurch gekennzeichnet, dass** das Hochleistungspolymer ein Polyarylensulfid ist.

11. Verfahren nach Anspruch 10, **dadurch gekennzeichnet, dass** das Polyarylensulfid Polyphenylensulfid ist.

12. Verfahren gemäß mindestens einem der Ansprüche 2 bis 11, **dadurch gekennzeichnet, dass** der Feststoff in den einzelnen Sedimentationsböden nicht direkt entgegen der aufströmenden Waschflüssigkeit sedimentiert.

13. Verfahren gemäß mindestens einem der Ansprüche 2 bis 12, **dadurch gekennzeichnet, dass** die Vorrichtung mindestens ein Kopfteil (KT), mindestens ein Bodenteil (BT) und dazwischen mindestens einen Mittelteil (MT) mit n Sedimentationsböden enthält.

14. Verfahren gemäß mindestens einem der Ansprüche 2 bis 13, wobei die Vorrichtung n Stufen enthält und n eine ganze Zahl ≥ 1 bedeutet.

15. Verwendung einer Vorrichtung gemäß Anspruch 1, zur Abtrennung von in der ersten flüssigen Phase suspendiertem Polyphenylensulfid.
